# EUROPEAN PATENT APPLICATION

(11) **EP 2 036 764 A1**
(43) Date of publication of application: **18.03.2009**
(21) Application number: 07116247.3
(22) Date of filing: 12.09.2007
(51) Int. Cl.: B60N 2/00, B60R 21/015

(54) **Method and system for detecting an occupancy state of a vehicle seat**

(71) Applicant: IEE INTERNATIONAL ELECTRONICS & ENGINEERING S.A., 6468 Echternach (LU)
(72) Inventor: Bieck, Werner, 54459,WILTINGEN (DE); Bour, Christian, 54490 Domprix (FR); Decoster, Yves, 6760 ETHE (BE); Goedert, Guenter, 54329 TRIER (DE); Lamesch, Laurent, 4881, LAMADELAINE (LU); Orlewski, Pierre, 9021 ETTELBRUCK (LU)
(74) Representative: Beissel, Jean

(57) **Abstract**

In an occupant detection system, which comprises an electrode arrangement for being placed into the seat of an automotive vehicle, the electrode arrangement including an antenna electrode for emitting an electric field into a detection region above the vehicle seat, and an evaluation circuit operatively connected to the antenna electrode, the evaluation circuit is configured and arranged so as to measure a capacitance influenceable by an occupying item in the detection region through interaction of the occupying item with the electric field. The evaluation circuit is further configured and arranged so as to determine fluctuations of the measured capacitance; analyse a frequency spectrum of the fluctuations; and derive an occupancy state of the vehicle seat based on both the measured capacitance and the frequency spectrum.

## Description

### Technical field

The present invention generally relates to the detection of the occupancy state of a vehicle seat, in particular using a capacitive detection system.

### Background Art

As used herein, an occupant detection system refers to a system adapted for detecting the occupancy state of a vehicle seat. A capacitive sensor, called by some electric field sensor or proximity sensor, designates a sensor, which generates a signal responsive to the influence of what is being sensed (a person, a part of a person's body, a pet, an object, etc.) upon an electric field emitted by the capacitive sensor. A capacitive sensor generally comprises at least one electrode, to which is applied an oscillating electric signal when the sensor is operating, and which thereupon emits an electric field into a region of space proximate to the electrode. A person or an object, when placed into this region of space, interacts with the electric field, and this interaction is detected by the capacitive sensor.

Numerous variants of capacitive sensing systems and associated methods are known in the field of occupancy sensing. The present invention uses an electrode arrangement, which includes at least a one antenna electrode, which, when in operation, emits an electric field into the region of space above the vehicle seat. The antenna electrode and grounded surfaces situated opposite the first electrode in the passenger compartment or any other conductive surfaces in the vehicle (e.g. a second antenna electrode) thus form capacitor plates of a capacitor. The space between these capacitor plates can be occupied by an occupying item of the seat. As used herein, the term "occupying item" may designate any object or animate being that can occupy the vehicle seat, e.g. an occupant, an object, a pet, a child seat (with or without a child therein), etc. placed on the seat. Accordingly, the capacitance of this capacitor depends on the state of occupancy of the seat (i.e. on whether an adult, a child, a pet, an empty or occupied child seat, or the like is placed thereon).

Optionally, to reduce the sensitivity of the system with respect to the space lying behind the antenna electrode (as seen from the region of space lying above the vehicle seat), it is known to provide a so-called shield electrode underneath the antenna electrode and to drive the shield electrode with substantially the same voltage as the antenna electrode. In this context, "the same voltage" means a voltage having the same amplitude and phase. Those skilled will appreciate that such a shield electrode and grounded surfaces of the vehicle compartment form another capacitor, whose capacitance depends on objects behind the shield electrode, e.g. the seat frame, the seat pan, the seat heater, etc. As long as the shield electrode is at substantially the same electric potential as the antenna electrode, the electric field between the two electrodes is substantially zero. This provides for shielding the antenna electrode against any uncertainties concerning and variations of the capacitance between the shield electrode and vehicle ground, and significantly increases the sensitivity of the antenna electrode into the direction of the occupant.

A capacitive seat occupancy classification system and method of this kind have been proposed, for instance, in EP 1 457 391 A1_{[m1]}. A similar electrode configuration for the purpose of capacitive proximity sensing in the field of robotics is known from US 5,166,679 (Vranish et al.).

A challenge of capacitive occupant detection systems is reliable detection of a wet seat cover, which otherwise could lead to an erroneous detection of an occupant. US patent 6,392,542, to Stanley, teaches an electric field sensor comprising an electrode arrangement with a antenna electrode and a shielding electrode mountable within a seat and operatively coupled to a sensing circuit, which applies to the electrodes an oscillating or pulsed signal "at most weakly responsive" to wetness of the seat. Stanley proposes to measure phase and amplitude of the current flowing to the antenna electrode in response to applying thereto a voltage of a frequency preferably well above 400 kHz, to detect an occupied or an empty seat and to compensate for seat wetness.

### Technical problem

It is an object of the present invention to provide for an improved detection of the occupancy state of a vehicle seat. This object is achieved by a method as claimed in claim 1 and a system as claimed in claim 5.

### General Description of the Invention

The method of detecting an occupancy state of a vehicle seat comprises the emission of an electric field into a detection region above the vehicle seat, the measurement of a capacitance influenceable by an occupying item in the detection region when it interacts with the electric field, the determination of fluctuations of the measured capacitance, the analysis of a frequency spectrum of these fluctuations and the derivation of an occupancy state of the vehicle seat based on both the measured capacitance and the frequency spectrum. The measured capacitance thus represents a first indicator of the occupancy state, whereas the frequency spectrum (or, likewise, the fluctuations) represents a second indicator of the occupancy state.

Preferably, the capacitance influenceable by an occupying item comprises a capacitance between an antenna electrode in the vehicle seat and vehicle ground. Additionally or alternatively, the capacitance influenceable by an occupying item comprises a capacitance between a first antenna electrode in the vehicle seat and a second antenna electrode in the vehicle seat.

According to a second aspect of the invention, an occupant detection system is proposed, which comprises an electrode arrangement for being placed into the seat of an automotive vehicle, the electrode arrangement including an antenna electrode for emitting an electric field into a detection region above the vehicle seat, and an evaluation circuit operatively connected to the antenna electrode. The evaluation circuit is configured and arranged so as to measure a capacitance that is influenceable by an occupying item in the detection region through interaction of the occupying item with the electric field. The evaluation circuit is further configured and arranged so as to determine fluctuations of the measured capacitance; analyse a frequency spectrum of the fluctuations; and derive an occupancy state of the vehicle seat based on both the measured capacitance and the frequency spectrum.

The inventors have recognised that the fluctuations of a capacitance influenced by an occupying item (i.e. sequences of the capacitance measures recorded during a certain time), not only the isolated capacitance measures themselves, represent an additional indicator of the occupancy state. Until now, fluctuations of the capacitances have been considered as disturbing and efforts always went into the direction of reducing the "noise" on the measurements, e.g. by smoothing of the data. The utility of the fluctuation spectrum as an additional indicator of the seat occupancy had not, so far, been discovered. Those skilled will appreciate that car, seat and occupant form together a complex system of mechanical oscillators having various oscillatory modes and corresponding eigenfrequencies. It has been discovered that the eigenfrequencies of a human seated on a vehicle seat can be derived from the fluctuations of the measured capacitance. In particular, the frequency spectrum of the fluctuations comprises a certain number of peaks, caused by the vibrations imposed of the seat and possibly its occupant or an object placed on it. These vibrations, and thus a particular set of spectral peaks, are characteristic of the occupancy state of the seat, i.e. whether it is empty, occupied by an adult, a child seat, etc. Accordingly, the analysis of the frequency spectrum of the fluctuations preferably concerns the range from 0.25 up to 25 Hz, more preferably from 0.5 to 25 Hz. As shall be appreciated, the measure of the capacitance itself, on the one hand, mainly depends on the electric properties of the occupying item, i.e. whether the occupying item is a good electric conductor or more like a dielectric. Size and mass of the occupying item may have an influence on the capacitance, but typically only to a lesser extent. On the other hand, the frequency spectrum of the fluctuations of the capacitance depends preponderantly on the mechanical properties of the occupying item, e.g. size, weight, weight distribution, etc. Accordingly, the two indicators are, in a certain sense, independent from one another, thus increase the information available to the evaluation circuit for making the estimate of the occupancy state.

According to a preferred embodiment of the occupant detection system, the electrode arrangement comprises a single antenna electrode. In this case, the capacitance influenceable by an occupying item comprises the capacitance between the single antenna electrode and vehicle ground. Preferably, the electrode arrangement comprises a shield electrode superposed to the antenna electrode and sandwiching with the antenna electrode an electrically insulating layer. During the measurement of the capacitance, the evaluation circuit preferably drives the shield electrode with the same voltage as the antenna electrode, so that the latter is substantially insensitive to what happens behind the shield electrode. The present makes a distinction between an "antenna electrode" and a "shield electrode": It should be noted, however, that an antenna electrode might be of a similar or the same structure as a shield electrode. For the purposes of the present, an antenna electrode is an electrode which, when the system is in use, emits or receives the electric field with which the occupying item interacts; a shield electrode, when the system is in use, shields the associated antenna electrode from behind.

According to another preferred embodiment of the occupant detection system, the electrode arrangement comprises a first antenna electrode and a second antenna electrode that can be arranged in the vehicle in such a way that an occupying item on the vehicle seat influences the electric field between the first and second antenna electrodes. In this case, the capacitance influenceable by an occupying item comprises the capacitance between the first and second antenna electrodes. Preferably, the first and second antenna electrodes are placed beside one another underneath a cover surface of the vehicle seat (i.e. in substantially the same plane underneath the seat surface). The first and second antenna electrodes are preferably at the same distance from the seat surface but they could also be at different distances from the seat surface. They should not, however, be superposed to one another. Preferably, they do not overlap either, since the occupying item would hardly affect electric field lines extending through an overlap region. Those skilled will appreciate that the antenna electrodes could be placed side by side into the same seat portion (seating portion or seat back) or that the first antenna electrode could be placed into the seating portion while the second is placed into the seat back. The second antenna electrode could also be arranged in the foot well associated with the vehicle seat or in or a portion of the dashboard lying in front of the vehicle seat. In this embodiment of the occupant detection system, the evaluation circuit may apply an oscillating voltage on the first antenna electrode and measure the current or charge induced in the second antenna electrode by the electric field. The evaluation circuit may also measure the current or charge in the first electrode. The evaluation circuit may also apply an oscillating voltage to the second antenna electrode. In this case, the oscillating voltage on the second antenna electrode preferably has the same amplitude as the voltage on the first antenna electrode, but opposite phase. An embodiment with at least two antenna electrodes may be referred to as "coupling mode" arrangement since the evaluation circuit may determine the capacitive coupling between pairs of the antenna electrodes.

Preferably, in such a "coupling mode" arrangement, the first antenna electrode has a first shield electrode superposed therewith so that the first antenna electrode and the first shield electrode sandwich an electrically insulating layer. Most preferably, the second antenna electrode also has a second shield electrode superposed therewith so that the second antenna electrode and the second shield electrode sandwich an electrically insulating layer.

Those skilled will be aware that there are numerous ways for determining capacitance, e.g. by measuring charging time of the antenna electrode(s), the charge accumulate for a given applied voltage, a current flowing into the antenna electrode(s) in response to a certain applied voltage, etc.

As will be appreciated, the evaluation circuit may be implemented in various ways. For instance, it may comprise or be implemented as an application-specific integrated circuit (ASIC), a field-programmable gate array (FPGA), a digital signal processor, and the like.

### Brief Description of the Drawings

Preferred embodiments of the invention will now be described, by way of example, with reference to the accompanying drawings in which:
Fig. 1 is a schematic lateral view of an occupant in a car seat;
Fig. 2 is a schematic view of a capacitive occupant detection system;
Fig. 3 is a simplified equivalent circuit diagram of a first embodiment of an evaluation circuit of an occupant detection system;
Fig. 4 is a schematic illustration of the mechanical oscillator system car-seat-occupant;
Fig. 5 is a simplified equivalent circuit diagram of a second embodiment of an evaluation circuit of an occupant detection system;
Fig. 6 is a simplified equivalent circuit diagram of a third embodiment of an evaluation circuit of an occupant detection system.

### Description of Preferred Embodiments

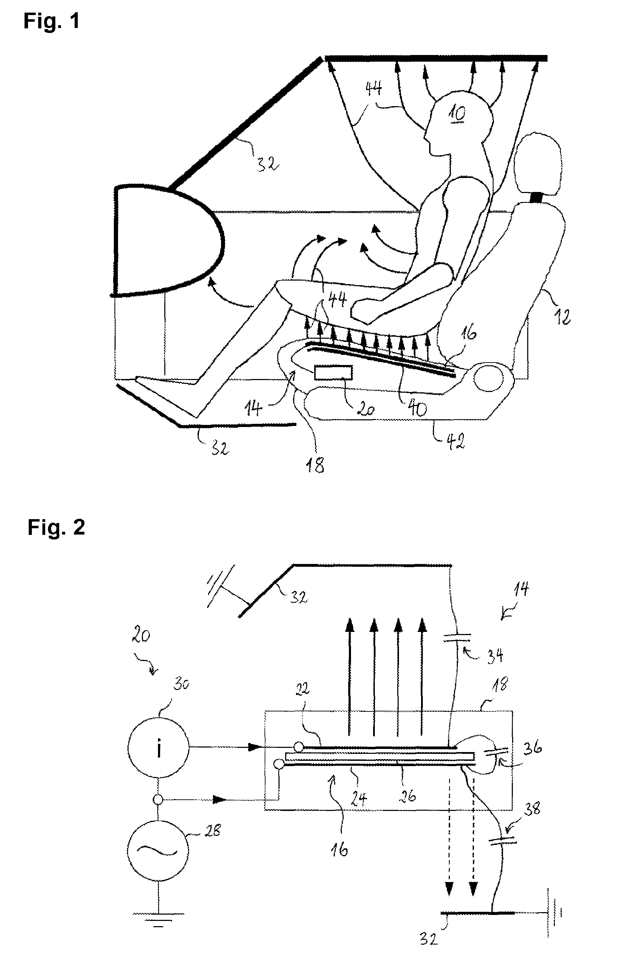

Fig. 1 shows an occupant 10 seated in a vehicle seat 12 equipped with a capacitive occupant detection system 14. The occupant detection system 14 comprises an electrode arrangement 16 disposed underneath the surface of the seating portion 18 of the vehicle seat 12 and an evaluation circuit 20. The occupant detection system 14 is shown in more detail in Fig. 2.

The electrode arrangement 16 comprises a sandwich structure with a substantially planar antenna electrode 22, a substantially planar shield electrode 24 and an electrically insulating layer 26 arranged between the electrodes 22 and 24. Various configurations for the electrode arrangement 16 are possible, for instance, the antenna electrode 22 and shield electrode could be provided as printed conductive layers on both sides of a flexible electrically insulating film (e.g. a PET film, a PEN film, a PI film, or the like). Alternatively, the electrodes 22, 24 could be carried on individual carrier films. At least one of the carrier films could serve as the electrically insulating spacer. Alternatively, an additional spacer could be used, e.g. an additional film, sheet or textile. The electrodes could also be conductive textile layers, separated by an insulating textile (e.g. a warp-knitted spacer fabric) or film. Other suitable configurations will readily come into the mind of those skilled in the art. It shall be noted that each electrode could form a closed surface within its outer boundaries but not necessarily has to form such a closed surface. Each electrode could, for instance, have the form of a continuous conductive pattern with openings or gaps therein (as opposed to having the form of a closed surface), e.g. in form of a wire running on a meandrous course, a lattice pattern, a grid pattern, combinations of these examples, etc. It should be understood that the term "substantially planar" is to be intended to cover an electrode configuration, where the electrode is not strictly comprised in a flat plan, e.g. when the electrode is curved or undulated, but relatively thin in comparison to its lateral dimensions.

In the shown embodiment, the evaluation circuit comprises an oscillator 28 (e.g. a voltage-controlled oscillator or a numerically controlled oscillator), which is operatively connected to the shield electrode 24, and a current measurement circuit 30 operatively connected between the shield electrode 24 and the antenna electrode 22.

When the electrode arrangement 16 is in place in the seating portion of the vehicle seat 18 (or, alternatively, in the seat back), the antenna electrode 22 forms a first capacitor with the surrounding grounded surfaces 32 of the vehicle compartment, e.g. with metal parts in the compartment ceiling, the vehicle door, the dashboard and/or the floor. The capacitance of this capacitor (the "first" capacitance) is illustrated at reference numeral 34. It is important to note that the first capacitance depends on the occupancy state of the vehicle seat 12 (i.e. on whether e.g. an adult, a child, a pet, a child seat, etc. occupies the space between the plates of the first capacitor). The antenna electrode 22 and the shield electrode 24 form together a second capacitor (having as capacitance the "second" capacitance, illustrated at reference numeral 36). Likewise, the shield electrode 24 forms a third capacitor with the surrounding grounded surfaces 32 of the vehicle compartment. The "third" capacitance of the third capacitor is shown at reference numeral 38. In the embodiment of Fig. 2, the capacitance influenceable by an occupying item, through interaction of the occupying item with the electric field emitted by the antenna electrode 22 in the detection region above the vehicle seat, corresponds to the first capacitance referred to hereinbefore.

When determining the capacitance 34, the oscillator 28 applies to the shield electrode 24 an oscillating voltage, while the current detection circuit 30 maintains on the antenna electrode 22 a voltage having substantially the same amplitude and phase as the voltage on the shield electrode. During the measurement of the capacitance 34, the shield electrode 24 thus remains at substantially the same electric potential as the antenna electrode 22. Consequently, the sensitivity of the antenna electrode 22 is directed only into the space above the vehicle seat 12. In other words, the shield electrode 24 shields the antenna electrode 22 and prevents it from capacitively coupling to objects lying behind (as seen from the antenna electrode 22) the shield electrode 24, e.g. a seat heater 40, the seat pan 42, etc. To achieve efficient shielding of the antenna electrode 22, the shield electrode 26 preferably is a little larger in size, as shown in Fig. 2. The course of the electric field lines 44 departing from the antenna electrode when the capacitance 34 is to be determined is roughly illustrated in Fig. 1. The occupant 10 has been drawn with a certain distance to the seating portion 18 only for the purpose of clarity of the drawing. Those skilled will appreciate that the current flowing into the antenna electrode 22 in response to an oscillating voltage of a predefined amplitude being applied to it depends on the capacitance 34 and therefore on the occupancy state of the seat 12. Accordingly, a measure of the capacitance 34 can be derived from the current flowing into the antenna electrode 22 and thus a first indicator of the occupancy state is obtained.

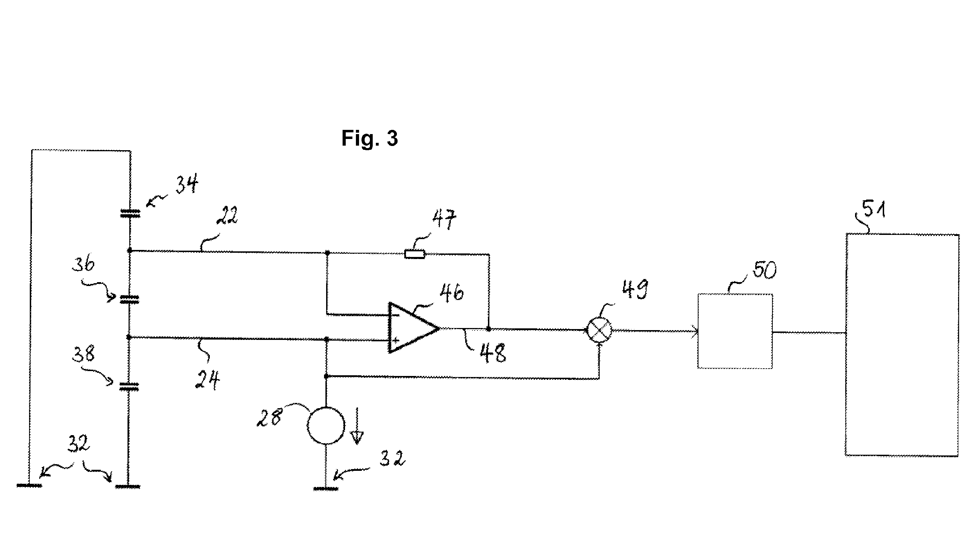

Fig. 3 shows a (simplified) equivalent circuit diagram of a first embodiment of a capacitive occupant detection system. Oscillator 28 applies an AC voltage to the shield electrode 24. Amplifier 46 and feedback impedance 47 form together a transimpedance amplifier, which maintains the voltage on the antenna electrode 22 substantially equal to the voltage on the shield electrode 24. The transimpedance amplifier thus converts the current flowing into the antenna electrode 22 into a voltage at the amplifier output 48. Since the antenna electrode 22 is at any moment of this measurement at substantially the same potential as the shield electrode 24, the current through the second capacitance 38 remains essentially zero. Therefore, the current flowing into the antenna electrode depends almost exclusively only on the first capacitance 34. Mixer 49 and low pass filter 50 convert the AC output of amplifier 46 to a DC voltage, which is dependent on the first capacitance 34. This voltage is fed to an analog-to-digital converter (ADC) input of a microcontroller 51. The mixer 50 preferably comprises a clocked rectifier outputting a DC signal proportional to the component of voltage output by the amplifier 46 that is in phase with the voltage on the shield electrode 24 and/or a DC signal proportional to the component of voltage output by the amplifier 46 that is 90°-phase-shifted with respect to the voltage on the shield electrode 24. The DC signal output by mixer 50 may be further treated before it is fed to the microcontroller 51, e.g. for calibrating purposes. Since even if the capacitance 34 is close to zero, there is an AC voltage at the output of amplifier 46 and therefore a signal at output of the low pass filter, this offset is preferably subtracted (not shown in the drawings) either before or after the mixer 50.

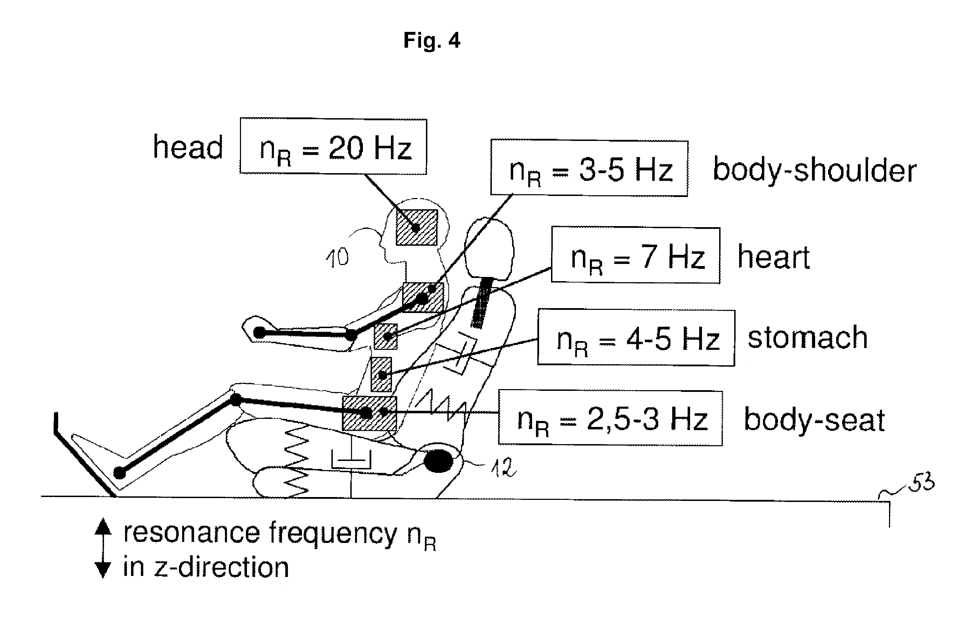

Fig. 4 schematically shows a model of the system of mechanical oscillators formed by the car, the seat and the occupant (based upon the publication "Comfort Assessment of Vehicles" of the IKA, RWTH Aachen, available online at http://www.ika.rwth-aachen.de/lehre/kfz-labor/4_comfort_en.pdf. It should be noted that the model is highly simplified. When the vehicle travels on a road, the unevenness thereof translates into vibrations communicated to the wheels, the chassis 53, the motor unit, the seat 12 and the occupant 10. The various mechanical oscillators of the system are thus caused to oscillate at their respective resonance frequencies. Examples of ranges of the resonance frequencies in z-direction (the vertical in Fig. 4) of these oscillators are indicated in Fig. 4. The resonance frequency of the chassis 53 is typically comprised in the range from 1 to 2 Hz, the resonance frequency of the wheels is comprised in the range from about 8 to 15 Hz and that of the motor unit in the range from about 12 to 15 Hz. The occupant's body, which may also be considered as a system of mechanical oscillators has resonance frequencies in the ranges 2.5 to 3 Hz (body-seat), 4 to 5 Hz (stomach), around 7 Hz (heart), 3 to 5 Hz (body-shoulder) and around 20 Hz (head). Those skilled will appreciate that when the seat 12 is empty or carries an object (e.g. a child seat, a bag, etc.), certain resonance frequencies will be absent from the system (while others might be present). For an empty child seat (light belted to the seat) or a light object, one observes, for instance resonance in the frequency range above about 10 Hz. For a lightly belted occupied child seat, the resonance may occur already at about 7 Hz. If the child seat is tightly belted to the seat, the resonance typically lies above 25 Hz. The analysis of the vibrations of the system thus provides an indication on the occupancy state of the seat 12. The vibrations of the seat and its possible occupant are detected through the fluctuations of capacitance 34.

In the embodiment of Fig. 3, the microcontroller 51 records the measures of the capacitance 34 during a predefined time interval (typically a few tens of seconds, preferably 5 to 30 s) and analyses the fluctuations thereof, e.g. by carrying out a Fourier transformation of the waveform so obtained and detecting the peaks in the frequency spectrum of the fluctuations. The measures of the capacitance 34 fluctuate around a mean value. This mean value may serve as the first indicator of the occupancy state, whereas a second indicator of the occupancy state may be retrieved from the fluctuations of the capacitance 34. Those skilled will appreciate that systems operating according to the precepts of the present invention can detect the occupancy state of a vehicle seat more reliably. For instance, the above-mentioned wet-seat-cover problem is significantly mitigated, since even if the measures of the capacitance 34 were similar to those one expects in the case of an adult occupant, the analysis of the fluctuations of the measures of the capacitance 34 would reveal that the typical peaks in the frequency spectrum of the fluctuations are absent. Of course, the analysis of the fluctuations may also be combined with further measurements aiming at detecting a wet seat cover, e.g. measuring at multiple frequencies.

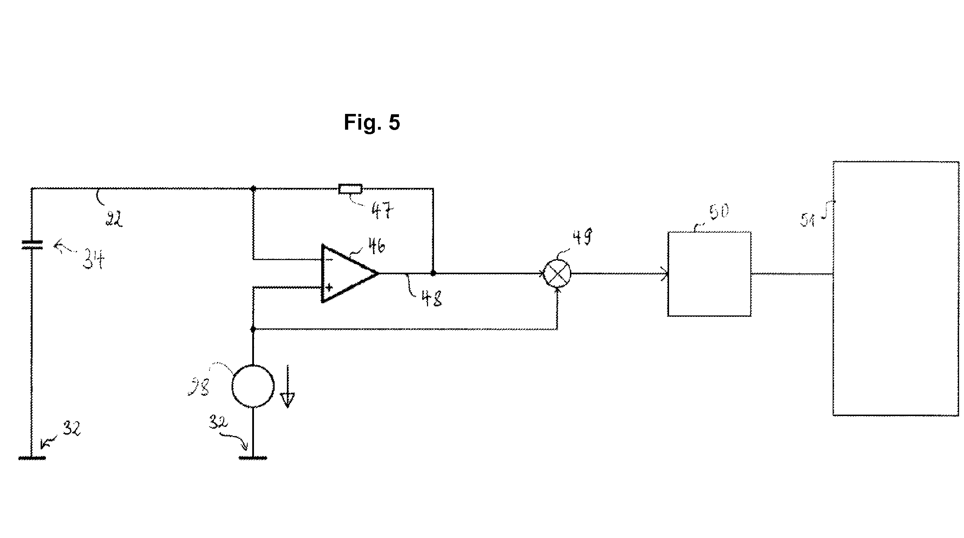

Fig. 5 shows a (simplified) equivalent circuit diagram of a second embodiment of a capacitive occupant detection system. In this embodiment, the electrode arrangement comprises only a single antenna electrode 22 and no shield electrode. Oscillator 28 applies an AC voltage to the non-inverting input of amplifier 46 and feedback impedance 47, forming together a transimpedance amplifier, which maintains the voltage on the antenna electrode 22 substantially equal to the voltage output by the oscillator 28. The transimpedance amplifier thus converts the current flowing into the antenna electrode 22 into a voltage at the amplifier output 48. The current flowing into the antenna electrode 22 depends almost on the capacitance 34 between the antenna electrode and vehicle ground 32. Mixer 49 and low pass filter 50 convert the AC output 48 of amplifier 46 to a DC voltage, which is dependent on the capacitance 34. This voltage is fed to an analog-to-digital converter (ADC) input of a microcontroller 51. The mixer 50 is preferably configured as in the embodiment of Fig. 3. The DC signal output by mixer 50 may be further treated before it is fed to the microcontroller 51, e.g. for calibrating purposes. The microcontroller 51 records the fluctuations of the capacitance 34, carries out the frequency analysis thereof and determines the occupancy state of the vehicle seat based on the capacitance 34 itself and the fluctuations of the capacitance.

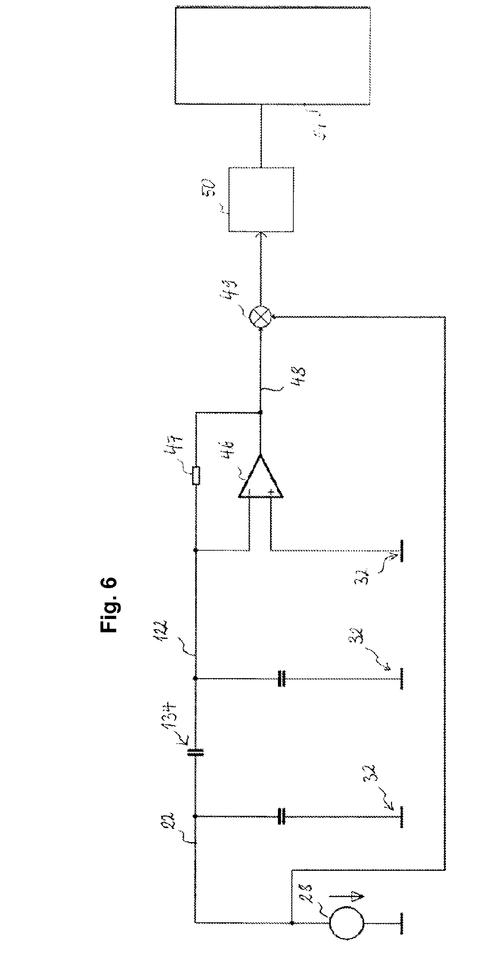

Fig. 6 shows a simplified equivalent circuit diagram of a third embodiment of a capacitive occupant detection system. In this embodiment, the occupant detection system comprises a first antenna electrode 22 and a second antenna electrode 122. One of the antenna electrodes 22, 122 is preferably arranged in the seating portion of the vehicle seat, whereas the other may be arranged, for instance, in the seat back, the foot well or the dashboard. The oscillator 28 is operatively connected to the first antenna electrode 22 and applies thereto an oscillating voltage, when the system is operating. The second antenna electrode 122 connected to the inverting input of an amplifier 46, which forms, together with impedance 47, a transimpedance amplifier. The latter amplifies the current flowing in the second antenna electrode in response to an oscillating voltage being applied to the first antenna electrode 22. Mixer 49, which is operatively connected to the oscillator 28 and the transimpedance amplifier, and low pass filter 50 convert the AC output 48 of amplifier 46 to a DC voltage, which is dependent on the capacitance 134 between the first antenna electrode 22 and the second antenna electrode 122. This voltage is fed to an analog-to-digital converter (ADC) input of a microcontroller 51.

The capacitance 134 between the two antenna electrodes 22, 122 depends, first, on the geometrical configuration of the antenna electrodes 22, 122 and, second, on the material present between the antenna electrodes 22, 122. Accordingly, the capacitance 134 reflects, which occupying item is currently placed in the region between the electrodes 22, 122. The microcontroller 51 determines, as a first indicator of the occupancy state, the capacitance 134, and further analyses the fluctuations of the capacitance 134 so as to obtain a second indicator of the occupancy state.

## Claims

1. A method of detecting an occupancy state of a vehicle seat comprising:
emitting an electric field into a detection region above said vehicle seat
measuring a capacitance that is influenceable by an occupying item in said detection region through interaction of said occupying item with said electric field; **characterised by**
determining fluctuations of said measured capacitance;
analysing a frequency spectrum of said fluctuations; and
deriving an occupancy state of said vehicle seat based on both said measured capacitance and said frequency spectrum.

2. The method as claimed in claim 1, wherein said capacitance influenceable by an occupying item comprises a capacitance between an antenna electrode in said vehicle seat and vehicle ground.

3. The method as claimed in claim 1, wherein said capacitance influenceable by an occupying item comprises a capacitance between a first antenna electrode in said vehicle seat and a second antenna electrode in said vehicle seat.

4. The method as claimed in any one of claims 1 to 3, wherein said analysis of the frequency spectrum comprises the analysis of the spectral range up to 25 Hz.

5. An occupant detection system, comprising
an electrode arrangement for being placed into the seat of an automotive vehicle, said electrode arrangement including an antenna electrode for emitting an electric field into a detection region above said vehicle seat,
an evaluation circuit operatively connected to said antenna electrode, said evaluation circuit being configured and arranged so as to measure a capacitance influenceable by an occupying item in said detection region through interaction with said electric field; **characterised in that** said evaluation circuit is further configured and arranged so as to determine fluctuations of said measured capacitance; analyse a frequency spectrum of said fluctuations; and derive an occupancy state of said vehicle seat based on both said measured capacitance and said frequency spectrum.

6. The occupant detection system as claimed in claim 5, wherein said electrode arrangement comprises a single antenna electrode and wherein said capacitance influenceable by an occupying item comprises the capacitance between said single antenna electrode and vehicle ground.

7. The occupant detection system as claimed in any one of claims 1 to 6, wherein said electrode arrangement comprises a shield electrode superposed to said antenna electrode and sandwiching with said antenna electrode an electrically insulating layer.

8. The occupant detection system as claimed in claim 5, wherein said electrode arrangement comprises a first antenna electrode and a second antenna electrode and wherein said capacitance influenceable by an occupying item comprises the capacitance between said first and second antenna electrodes.

9. The occupant detection system as claimed in claim 8, wherein said electrode arrangement comprises a first shield electrode superposed to said first antenna electrode and sandwiching with said first antenna electrode an electrically insulating layer and a second shield electrode superposed to said second antenna electrode and sandwiching with said second antenna electrode an electrically insulating layer.
